# EUROPÄISCHE PATENTSCHRIFT

(11) **EP 0 695 704 B1**
(45) Veröffentlichungstag und Bekanntmachung des Hinweises auf die Patenterteilung: **12.08.1998**
(21) Anmeldenummer: 95110439.7
(22) Anmeldetag: 05.07.1995
(51) Int. Cl.: B65G 47/86

(54) **Vorrichtung zum Transportieren von Gegenständen**
Transporting device for articles
Dispositif de transport pour articles

(30) Priorität: 08.07.1994 DE 4424077
(43) Veröffentlichungstag der Anmeldung: 07.02.1996
(73) Patentinhaber: KHS Maschinen- und Anlagenbau Aktiengesellschaft, 44143 Dortmund (DE)
(72) Erfinder: Varhaniovsky, Julius, D-76327 Pfinztal (DE)

(56) Entgegenhaltungen:
- DE-B- 2 340 796
- DE-C- 1 482 616
- US-A- 4 651 879

## Beschreibung

Die Erfindung betrifft eine Vorrichtung zum Transportieren von Gegenständen, wie insbesondere Getränkeflaschen oder dergleichen, nach dem Oberbegriff des Anspruchs 1.

Gegenstände, wie insbesondere Getränkeflaschen, sind oftmals nach vorgegebenen Kriterien zu sortieren. So müssen wieder zu befüllende Getränkeflaschen daraufhin untersucht werden, ob in ihnen Flüssigkeiten enthalten waren oder sind, wie Chemikalien, Benzin etc., die eine Wiederverwendung als Getränkeflasche absolut ausschließen, da derartige Flüssigkeiten gefährlich sind und/oder der Restgeschmack solcher Flüssigkeiten nicht entfernt werden kann. Dies gilt insbesondere bei Tafelwasserflaschen, die praktisch nur mit Tafelwasser befüllt werden können; selbst wenn schon Säfte oder Limonaden in solchen Flaschen enthalten waren, so ist deren Geschmack, wenn eine Wiederbefüllung mit Tafelwasser erfolgt, feststellbar, störend und daher unerwünscht. Verfahren und Vorrichtungen zum Prüfen derartiger Flaschen auf Fremdstoffanteile sind an sich bekannt. Aufgrund einer solchen Prüfung ist eine Vorrichtung zum Sortieren der Gegenstände, nämlich insbesondere der Getränkeflaschen, derart zu steuern, daß nicht erneut brauchbare, d.h. nicht wiederbefüllbare Getränkeflaschen ausgeworfen werden, beispielsweise in einen Container, wo sie einem stofflichen Recycling zugeführt werden oder aber über einen ersten Weg abgetrennt werden und von einem anschließenden Förderer weiterbewegt werden. Flaschen, die wiederbefüllt werden können, müssen über einen zweiten Weg abgegeben werden, wobei die Reihenfolge der Abgabewege nicht fest ist.

Für die vorgenannten Zwecke werden Vorrichtungen zum Transportieren von Gegenständen eingesetzt, die zumindest einen Förderer aufweisen, der an Übergabepositionen für die Gegenstände Einrichtungen aufweist, mit denen gezielt Gegenstände aufgenommen oder nicht aufgenommen bzw. abgegeben oder nicht abgegeben werden können bzw. der Strom der Gegenstände in mehrere Einzelströme aufgespalten werden kann.

Eine derartige gattungsgemäße Vorrichtung ist in der nicht vorveröffentlichten Patentanmeldung P 43 04 432 beschrieben. Die bekannte Vorrichtung weist einen Kreisförderer mit am Umfang angeordneten, teilkreisförmigen Aufnahmen auf. Die in diesen Aufnahmen eingreifenden Gegenstände, wie Flaschen, können von einem Finger teilbogenförmig umgriffen werden. Sie werden von diesem Finger nicht festgehalten, sondern müssen auf einer in einer unteren Ebene angeordneten Platte, die radial und umfangsmäßig im Bereich der Aufnahme vorgesehen ist, stehen, damit sie nicht herunterfallen; der Finger ist an einem gelenkigen, mehrteiligen Hebelmechanismus ausgebildet. Die Vorrichtung arbeitet grundsätzlich zufriedenstellend.

Die DE 23 40 796 B2 und die US 4,651,879 zeigen eine gattungsgemäße Vorrichtung mit an jeder Aufnahme paarig ausgebildeten Finger. Bei beiden Vorrichtungen folgt die Betätigung der Finger über Wellen bzw. Stifte, die fliegend, d.h. nur einseitig gelagert sind und an deren anderem Ende die Betätigungskräfte angreifen. Dies führt zu hohen Belastungen der Lager und damit zu hohem Verschleiß.

Die DE-PS 14 82 616 zeigt ebenfalls eine gattungsgemäße Vorrichtung mit paarig ausgebildeten Fingern. Diese werden entgegen der Kraft einer Feder durch eine stationär ausgebildete Nockenbahn über einen mit einer Schubstange verbundenen Schließkeil geöffnet, während die Schließund Haltestellung für die Flaschen lediglich durch die Kraft der Feder bewirkt wird, so daß keine stabile Stellung gegeben ist, die auch ohne Einwirkung äußerer Kräfte beibehalten wird. Es sind damit keine stabilen Schließ- und Öffnugnsstellungen vorhanden.

Der Erfindung liegt die Aufgabe zugrunde, eine gattungsgemäße Vorrichtung unter Vermeidung genannter Nachteile zur Erzielung einer die Gegenstände sicher haltenden, aber konstruktiv einfachen Ausgestaltung weiterzubilden.

Erfindungsgemäß wird die genannte Aufgabe bei einer gattungsgemäßen Vorrichtung durch die kennzeichnenden Merkmale des Anspruchs 1 gelöst.

Durch die bekannte paarige Anordnung der Finger ist ein sicheres mittiges Halten der Gegenstände, insbesondere Flaschen, garantiert. Die Flaschen müssen daher nicht mehr auf Plattformen aufsitzen; eine (stationäre) Umführung kann entfallen. Die Flaschen werden exakt positioniert. Durch große Spannwege der Greifer-Finger können auch die bei PET-Flaschen gegebenen relativ großen Geometrieunterschiede ausgeglichen werden. Bei Flaschen, die mit Rillen in ihrem Umfang ausgebildet sind, können die Finger nicht nur kraftschlüssig an den Flaschen angreifen, sondern sogar formschlüssig in die entsprechenden Rillen eingreifen. Die Steuerung erfolgt durch eine Nockensteuerung mit einer senkrecht zur Achse des Kreisförderers ausgerichteten Steuerwelle.

Indem die Finger in vorteilhafter Weise unmittelbar an Drehachsen schwenkbar gelagert sein können, die fördererfest angeordnet sind, selbst nicht relativ zum Drehförderer beweglich sind, ergibt sich eine insgesamt einfache konstruktive Ausgestaltung der erfindungsgemäßen Vorrichtung. Gemäß einer bevorzugten Ausgestaltung ist vorgesehen, daß die Finger symmetrisch zur Aufnahme angeordnet sind.

Das zuverlässige Halten der Gegenstände kann vorteilhaft dadurch bewirkt werden, daß die Finger durch eine Zwangssteuerung in ihrer geschlossenen Position gehalten sind. Auch die Öffnungsstellung kann eine Zwangsstellung beinhalten, in einfacher bevorzugter Weise ist aber vorgesehen, daß die Finger unter Wirkung von Federn öffnen. Gemäß einer Weiterbildung ist vorgesehen, daß

Schließ- und Öffnungsstellung der Finger stabile Stellungen derselben sind, wobei darüber hinaus um 90° verdrehte stabile Drehstellungen einer Steuerwelle der Nockensteuerung vorgesehen sind und/oder ein nicht vollständig kreissymmetrisches, drehfest, aber axial gleitbar auf der Steuerwelle angeordnetes, federbelastetes, in einer Position der Steuerwelle in eine am Kreisförderer fest ausgebildete Nut eingreifendes Gleitteil vorgesehen ist.

Die Steuerung der Steuereinheit erfolgt in vorteilhafter Weise einerseits dadurch, daß eine Zylinder-Kolben-Einheit mit einem Steuerkolben, der in den Bewegungsweg eines mit der Steuerachse verbundenen Steuernockens verfahrbar ist, vorgesehen ist und andererseits dadurch, daß ein mit einem drehfest mit der Steuerwelle verbundenen Steuernocken zusammenwirkendes Steuerteil zum Verschwenken der Steuerwelle vorgesehen ist.

Eine weitere äußerst bevorzugte Ausgestaltung sieht einen dreh- und axialfesten, mit der Steuerwelle verbundenen Steuerkopf zum Verschwenken der Finger aus ihrer Öffnungs- in eine Schließstellung vor.

Mit der erfindungsgemäßen Ausgestaltung der Vorrichtung zum Transportieren von Gegenständen werden gegenüber dem Stand der Technik wesentliche Vorteile erreicht. Zunächst können die Flaschen selbst durch die an ihnen angreifenden Finger gehalten werden, und zwar gegebenenfalls formschlüssig, so daß eine Aufstellplattform nicht mehr notwendig ist. Der gesamte Steuermechanismus wird durch die Zwangs-Nocken-Steuerung wesentlich vereinfacht. Weiterhin führt die Zwangs-Nocken-Steuerung dazu, daß die erfindungsgemäße Vorrichtung bidirektional, d.h. wahlweise mit Rechts- oder Links-Lauf eingesetzt werden kann. Darüber hinaus werden die Öffnungs- und Schließbewegung der Finger erheblich verkürzt, so daß ein schnelles Ergreifen der Gegenstände möglich ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Figur 1: einen Horizontalschnitt durch eine erfindungsgemäße Vorrichtung in verschiedenen Horizontalebenen;
- Figur 2: einen Vertikalschnitt durch die erfindungsgemäße Vorrichtung, links im Bereich einer Ein- oder Ausschleusstation für Flaschen, rechts im Bereich einer Rückstellstation.

Die erfindungsgemäße Vorrichtung 1 zum Transportieren von Gegenständen, insbesondere Getränkeflaschen oder dergleichen, weist einen um eine Achse A drehbaren Kreisförderer 2 auf.

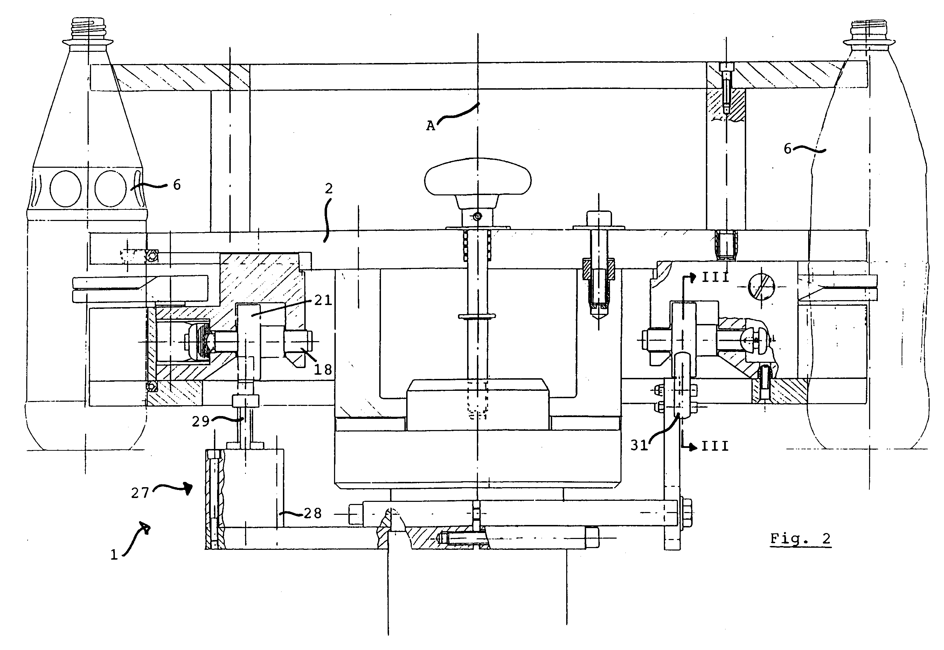

Der Kreisförderer weist an seinem Umfangsrand teilkreis-, insbesondere etwa halbkreisförmige Aufnahmen 3 auf, in die die fraglichen Behältnisse, wie Getränkeflaschen, eingebracht werden können. Jeder Aufnahme 3 ist beidseitig und symmetrisch zu ihr jeweils ein Finger 4, 4a zugeordnet, die in ihrer in Position 5 gezeigten Öffnungsstellung die Aufnahme 3 freigeben, so daß in diese eine Flasche eingebracht bzw. aus dieser eine in ihr befindliche Flasche freigegeben werden kann, während die Finger 4, 4a in der in Position 5a dargestellten Stellung eine in eine Aufnahme 3 aufgenommene Flasche 6 (Fig. 2) festhalten.

Das Zuführen der Flaschen 6 in die Aufnahmen 3 und auch das Fortführen kann beispielsweise jeweils durch entsprechende Kreisförderer erfolgen, die neben dem Förderer 2 in dessen Umfangsbereich angeordnet sind und mit diesem zusammenwirken. Es können auch Linearförderer, wie Förderbänder, Förderketten oder dergleichen vorgesehen sein, die Flaschen in die Aufnahmen 3 hineinfördern, woraufhin die Flaschen dann nach Schließen der Finger 4, 4a durch den Kreisförderer 2 bis zu der jeweils für eine bestimmte Flasche gewünschten Freigabeposition mitgefördert werden. Von solchen Freigabepositionen werden die Flaschen dann selektiv durch entsprechende genannte Förderer wieder fortgefördert.

Es werden demgemäß der erfindungsgemäßen Vorrichtung zumindest ein Zu-Förderer zum Zufördern der Flaschen und mindestens zwei Fort-Förderer zum Fortführen der Flaschen nach vorgegebenen Selektionskriterien zugeordnet. Die Selektion kann beispielsweise darauf beruhen, daß bei Tafelwasserflaschen festgestellt wurde, ob sie nur Wasser enthielten oder ob sie Fremdstoffe enthielten (was mit geeigneten bekannten Vorrichtungen und Verfahren festgestellt werden kann) oder ob anderweitige Getränkeflaschen lediglich Getränke oder aber unzumutbare Fremdstoffe, wie Giftstoffe oder dergleichen, enthalten haben; jeweils im ersten Fall werden die Flaschen einem Förderer zugefördert, der die "guten" Flaschen aufnimmt, während jeweils im zweitgenannten Fall die eben nicht gewünschten Flaschen über einen anderen Förderer aussortiert bzw. ausgeworfen werden.

Die Finger 4, 4a sind einstückig an in einem Lagerblock 7 um Achsen 8, 8a schwenkbar gelagerten, zweiarmigen Hebeln 9, 9a ausgebildet. Sie werden durch eine zwischen ihrem den Fingern 4, 4a abgewandten Hebelarm 11, 11a und dem Lagerblock 7 in einer Ausnehmung 12 angeordnete Druckfeder 13 in ihre in der Position 5 dargestellte Öffnungsstellung gedrückt, soweit sie nicht - in noch zu beschreibender Weise - entgegen der Wirkung der Feder 12 in ihrer in Position 5a dargestellten Schließstellung gehalten werden.

Der Lagerblock 7 ist fördererfest am Umfang des Kreisförderers 2 angeordnet, d.h. starr mit diesem verbunden.

Bei den Positionen 5b, 5c ist eine unterhalb der in den Positionen 5, 5a der Hebel 9, 9a befindliche Ebene des Steuermechanismus dargestellt. Es ist ersichtlich, daß die Hebel 9, 9a über Paßfedern 14, 14a jeweils mit einarmigen Hebeln 16, 16a drehfest verbunden sind. Auf die Hebel 16, 16a wirkt entgegen der Wirkung der Federn 13 ein zweizähliger oder spiegelsymmetrisch zu seiner Schwenkachse B ausgebildeter Nockenkopf 17, d.h. ein Nockenkopf 17, dessen Ausgangsposition, beispielsweise 0°, und eine um 180° verschwenkte Position ununterscheidbar sind. Der Nockenkopf 17 ist drehfest mit einer Steuerwelle 18 verbunden, an der über eine Paßfeder 19 hintereinander und um 90° versetzt ebenfalls zweizählig oder spiegelsymmetrisch zur Achse B ausgebildete Steuernocken 21, 22 angeordnet sind. Bei der in der Position 5b dargestellten Stellung der Steuerwelle 18 liegen die Hebel 16, 16a an der Schmalseite des Nockenkopfes 17 an, so daß dieser die Federn 13 freigibt und diese damit die Arme 9, 9a bzw. 4, 4a in die Position 5 drücken können. Gleichzeitig wird der Nockenkopf 17 und mit ihm die Steuerwelle 18 durch die Wirkung der Federn 13 und die Hebel 16, 16a stabil in der in der Position 5b dargestellten Stellung gehalten, soweit keine Steuerkräfte auf die Steuerwelle 18 wirken.

Die Position 5c entspricht nun der Position 5a. In dieser Position wurde die Steuerwelle 18 um 90° gegenüber der Position 5, 5b verdreht. Der Nockenkopf 17 drückt mit seinen Breitseiten die Hebel 16, 16a auseinander, so daß die doppelseitigen Hebelarme 9, 9a und deren Finger 4, 4a in die in Position 5a dargestellte Schließstellung gedrückt werden.

Auch die in Position 5c dargestellte Stellung der Steuerwelle 18 und damit der Arme 9, 9a und der Finger 4, 4a ist eine stabile Lage. Die Stabilität dieser Position wird dadurch erreicht, daß gleitbar auf der Steuerwelle 18, drehfest, aber axial verschiebbar auf dieser, ein ebenfalls zweizähliges Gleitteil 23 angeordnet ist, das durch Druckfedern 24, die sich am drehfest und axialfest auf der Welle 18 sitzenden Nockenteil 17 abstützen, in eine entsprechend angepaßte Nut oder Ausnehmung 26 im Lagerblock 7 gedrückt wird. Die Nut 26 ist länglich ausgebildet. Wird die Steuerwelle 18 wiederum durch äußere Einwirkungen aus der in Position 5c dargestellten Stellung in die der Position 5b gedreht, so muß hierzu das Gleitteil 23 entgegen der Wirkung der Federn 24 aus der Nut 26 herausgedrückt werden, indem es an deren Wänden entlanggleitet. Sowohl die rückwärtigen Wände des Gleitteils 23 als auch die Wandungen der Nut 26 sind abgerundet, so daß ein solches Herausgleiten des Gleitteils 23 entgegen der Wirkung der Federn 24 aus der Nut 26 möglich ist (hierzu auch Fig. 2 rechte Seite).

Zur Steuerung der Steuerwelle 18 aus ihrer in der Position 5b dargestellten Stellung in die Stellung der Position 5c und damit der Hebel 9, 9a und der Finger 4, 4a aus der in Position 5 dargestellten Stellung in die der Position 5a ist eine doppeltwirkende Kolben-Zylinder-Einheit 27 vorgesehen, die einen hydraulisch wirkenden Steuerzylinder 28 und einen in diesem axial beweglichen Steuerkolben 29 aufweist, der in den Weg der Steuernocken 21 unterhalb der Steuerwelle 18 verfahrbar ist.

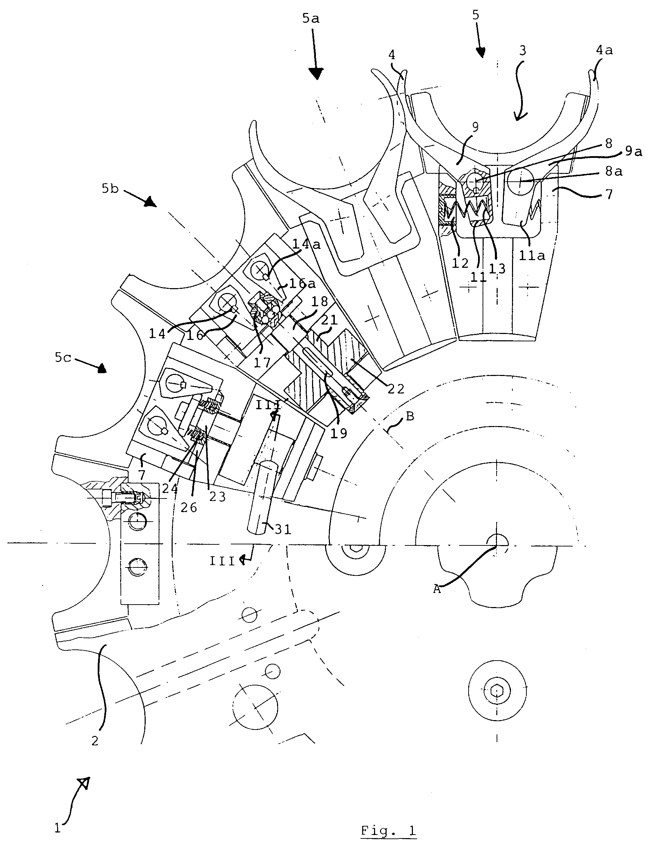

Ist der Steuerkolben 29 in den Weg der Steuernocken 21 ausgefahren, so stößt der untere Teil des Steuernockens 21, wenn er sich aus der Position 5b in die Position 5c mit dem Kreisförderer 2 bewegt, gegen den Steuerkolben 29. Der Steuernocken 21 wird somit durch die Kreisbewegung des Kreisförderers 2 um die Achse B der Steuerwelle 18 verschwenkt, die den Nockenkopf 17 mitverschwenkt, wobei sie schließlich durch das federgelagerte Gleitteil 23 in die in Position 5c dargestellte stabile Stellung gedrückt wird, die der Schließstellung der Finger 4, 4a, wie sie in Position 5 der Fig. 1 dargestellt ist, entspricht.

Ist der Steuerkolben 29 nicht ausgefahren, so bewegt sich die entsprechende Aufnahmeeinheit unverändert über die Kolben-Zylinder-Einheit 27 mit geöffneten Fingern 4, 4a (entsprechend der Position 5) hinweg.

Zur Rückbewegung der Finger 4, 4a aus einer Schließstellung (entsprechend Position 5a) in eine Öffnungsstellung (entsprechend Position 5) ist bei der dargestellten Ausführungsform ein stationäres Rückstellglied 31 vorgesehen (Fig. 2, rechte Seite), das permanent in den Weg der Steuernocken 22 ragt, wenn sich diese in ihrer der Position 5c entsprechenden Stellung (Öffnungsstellung der Finger 4, 4a entsprechend Position 5) befinden, die auch der Darstellung der rechten Seite der Fig. 2 entspricht. Beim Bewegen der Steuernocken 22 über das Steuerteil 31 aufgrund der Drehbewegungen des Kreisförderers 2 schlagen die Steuernocken 22 am Steuerteil 31 an und werden von diesem aus der Stellung der Position 5c in die der Position 5b verschwenkt, wobei diese, wie gesagt, unter der Wirkung der Feder 13 eine stabile Drehlage der Welle 18 beinhaltet. In dieser Stellung sind, wie gesagt, die Finger 4, 4a wieder geöffnet.

Während aus zeichnerischen Gründen die unterschiedlichen Positionen 5, 5a, 5b, 5c unmittelbar nebeneinander gezeichnet wurden, als ob die Einheit 27 und das Steuerteil 29 ebenfalls unmittelbar nebeneinander (mit dem Abstand der Aufnahmeteile) angeordnet wären, wird dies in der Praxis in der Regel nicht der Fall sein. Ein Steuerteil 29 wird vor einem Bereich eines Drehförderers angeordnet sein, in dem keine Flaschen bewegt werden bzw. vor der Aufnahmeposition für Flaschen und vor einer Abgabeposition, in der noch im Förderer verbliebene Flaschen auf jeden Fall von diesem abgegeben und gegebenenfalls auf einen weiteren Förderer übertragen werden.

Ein dem Rückstellglied entsprechendes Steuerteil, das allerdings mit den Steuernocken 21 zusammenwirkt, wird unmittelbar im Bereich einer Aufnahmeposition für Flaschen angeordnet sein, wenn dort notwendigerweise alle zugeförderten Flaschen von dem hier dargestellten Kreisförderer 2 aufgenommen werden sollen.

Eine Zylinder-Kolben-Einheit 27 wird im Bereich einer Weiche angeordnet sein, d.h. zunächst in einer Position des hier dargestellten Drehförderers, in dem gegebenenfalls Flaschen von einem anderen Förderer aufgenommen oder nicht aufgenommen werden sollen. Wenn eine Flasche aufgenommen werden soll, so wird der Kolben 29 der Kolben-Zylinder-Einheit 27 ausgefahren sein, so daß die Finger 4, 4a die entsprechende Flasche ergreifen und diese dann vom hier dargestellten Drehförderer 2 mitgenommen werden kann.

Eine entsprechende Kolben-Zylinder-Einheit 27 kann auch an einer Weiche, bei der zu entscheiden ist, ob eine Flasche abgegeben werden soll oder von dem hier dargestellten Drehförderer 2 weitertransportiert werden soll, angeordnet sein; in diesem Falle hat sie aber mit den Steuernocken 22 zusammenzuwirken, um bei ausgefahrenem Kolben 29 die Finger 4, 4a in einer der oben beschriebenen Weise entsprechenden Weise zu öffnen.

## Patentansprüche

1. Vorrichtung zum Transportieren von Gegenständen, wie insbesondere Getränkeflaschen oder dergleichen, mit einem mit Aufnahmen (3) für die Gegenstände versehenen Kreisförderer (2), mit an diesen paarig angreifenden und diese umgreifenden Fingern (4, 4a), dadurch gekennzeichnet, daß jeweils die Achse (B) einer drehbaren Steuerwelle (18) einer Nockensteuerung (16, 17, 18, 21, 22,27, 28, 29, 31) senkrecht zur Achse des Kreisförderers (2) ausgerichtet ist, und daß jeweils mit einer Steuerwelle (18) ein Nockenkopf (17) zum Verschwenken paarig angeordneter Finger (4, 4a) aus einer Öffnungs- in eine Schließstellung verbunden ist.

2. Vorrichtung nach Anspruch 1, dadurch gekennzeichnet, daß die Finger (4, 4a) unmittelbar am Förderer (2) schwenkbar gelagert sind.

3. Vorrichtung nach Anspruch 1 oder 2, dadurch gekennzeichnet, daß die Finger (4, 4a) symmetrisch zur Aufnahme (3) angeordnet sind.

4. Vorrichtung nach einem der vorangehenden Ansprüche, dadurch gekennzeichnet, daß die Finger durch eine Zwangssteuerung in ihrer geschlossenen Position gehalten sind.

5. Vorrichtung nach einem der vorangehenden Ansprüche, dadurch gekennzeichnet, daß die Finger (4, 4a) unter Wirkung von Federn (12) öffnen.

6. Vorrichtung nach einem der vorangehenden Ansprüche, dadurch gekennzeichnet, daß Schließ- und Öffnungsstellung der Finger (4, 4a) stabile Stellungen derselben sind.

7. Vorrichtung nach einem der vorangehenden Ansprüche, gekennzeichnet durch um 90° verdrehte stabile Drehstellungen einer Steuerwelle (18) der Nockensteuerung (16, 17, 18, 21, 22, 27, 28, 29, 31).

8. Vorrichtung nach Anspruch 7, gekennzeichnet durch ein nicht vollständig kreissymmetrisches, drehfest, aber axial gleitbar auf der Steuerwelle (18) angeordnetes, federbelastetes, in einer Position der Steuerwelle (18) in eine am Kreisförderer (2) fest ausgebildete Nut (26) eingreifendes Gleitteii (23).

9. Vorrichtung nach einem der Ansprüche 6 bis 8, gekennzeichnet durch eine Zylinder-Kolben-Einheit (27) mit einem Steuerkolben (29), der in den Bewegungsweg eines jeweils mit einer Steuerwelle (18) verbundenen Steuernockens (21) verfahrbar ist.

10. Vorrichtung nach einem der Ansprüche 6 bis 9, gekennzeichnet durch einen mit einem drehfest mit der Steuerwelle (18) verbundenen Steuernocken (22) zusammenwirkenden Steuerteil (31) zum Verschwenken der Steuerwelle (18).

## Claims

1. Apparatus for the transport of objects, especially drinking bottles or the like, with a circular conveyor (2) provided with a supporting device (3) for the objects, with pairs of gripper arms (4, 4a) engaging and embracing these objects, characterised by the fact that the axis (B) of a rotatable control shaft (18) of a cam steering (16, 17, 18, 21, 22, 27, 28, 29, 31) is arranged perpendicular to the axis of the circular conveyor (2) and a cam head (17) for moving the gripper arms (4, 4a) arranged in pairs from an opening into a closing position is connected with a control shaft.

2. An apparatus as set forth in claim 1, characterised by the fact that the grippers (4, 4a) are pivoted direct on the conveyor (2).

3. An apparatus as set forth in claim 1 or 2, characterised by the fact that the grippers (4, 4a) are arranged symmetrically to the supporting device (3).

4. An apparatus as set forth in one of the preceding claims, characterised by the fact that the grippers (3, 4a) are kept in their closed position by automatic control.

5. An apparatus as set forth in one of the preceding claims, characterised by the fact that springs (12) urge the grippers (4, 4a) to open.

6. An apparatus as set forth in one of the preceding claims, characterised by the fact that the closing and opening position of the grippers (4, 4a) are stationary positions.

7. An apparatus as set forth in one of the preceding claims, characterised by stable rotary positions turned by 90°, of a control shaft of the cam steering (16, 17, 18, 21, 22, 27, 28, 29, 31).

8. An apparatus as set forth in claim 7, characterised by a not completely circular-symmetrical, spring-loaded sliding device (23) arranged on the control shaft (18) in a non-revolving but axially sliding way, engaging a firm groove adjacent to the circular conveyor (2) in a position of the control shaft (18).

9. An apparatus as set forth in one of the preceding claims 6 to 8, characterised by a cylinder piston unit (27) with a control piston (29) which can be displaced into the track of travel of a control cam (21) connected with a control shaft (18).

10. An apparatus as set forth in one of the preceding claims 6 to 9, characterised by a control part (31) interacting with a control cam (22) connected with the control shaft (18) in a non-rotary way for moving the control shaft (18).

## Revendications

1. Dispositif pour le transport d'objets, comme en particulier des bouteilles pour boissons ou analogues, comportant un convoyeur circulaire (2) muni de logements (3) pour les objets, des doigts (4, 4a) s'engageant par paires sur ceux-ci et enserrant ceux-ci, caractérisé en ce que l'axe (B) d'un arbre de commande (18) rotatif d'une commande à cames (16, 17, 18, 21, 22, 27, 28, 29, 31) est dirigé à chaque fois perpendiculairement à l'axe du convoyeur circulaire (2), et en ce qu'à chaque fois est relié à un arbre de commande (18) un bouton de came (17) pour faire pivoter des doigts (4, 4a) agencés par paires d'une position d'ouverture à une position de fermeture.

2. Dispositif selon la revendication 1, caractérisé en ce que les doigts (4, 4a) sont montés pivotant directement sur le convoyeur (2).

3. Dispositif selon la revendication 1 ou 2, caractérisé en ce que les doigts (4, 4a) sont montés symétriquement par rapport au logement (3).

4. Dispositif selon l'une des revendications précédentes, caractérisé en ce que les doigts sont tenus dans leur position fermée par une commande forcée.

5. Dispositif selon l'une des revendications précédentes, caractérisé en ce que les doigts (4, 4a) s'ouvrent sous l'effet de ressorts (12).

6. Dispositif selon l'une des revendications précédentes, caractérisé en ce que les positions d'ouverture et de fermeture des doigts (4, 4a) sont des positions stables de ceux-ci.

7. Dispositif selon l'une des revendications précédentes, caractérisé par des positions de rotation stables tournées de 90° d'un arbre de commande (18) de la commande à cames (16, 17, 18, 21, 22, 27, 28, 29, 31).

8. Dispositif selon la revendication 7, caractérisé par une pièce de glissement (23) pas entièrement de symétrie de révolution, montée solidaire en rotation mais de façon coulissante dans le sens axial sur l'arbre de commande (18), précontrainte élastiquement, s'engageant dans une position de l'arbre de commande (18) dans une rainure (26) formée fixe sur le convoyeur circulaire (2).

9. Dispositif selon l'une des revendications 6 à 8, caractérisé par une unité à piston et cylindre (27) comportant un piston de commande (29), qui peut être amené sur la trajectoire de déplacement d'une came de commande (21) reliée à un arbre de commande (18).

10. Dispositif selon l'une des revendications 6 à 8, caractérisé par une pièce de commande (31) coopérant avec une came de commande (22) reliée de manière solidaire en rotation à l'arbre de commande (18) pour faire pivoter l'arbre de commande (18).
